# EUROPEAN PATENT SPECIFICATION

(11) **EP 2 953 998 B1**
(45) Date of publication and mention of the grant of the patent: **22.03.2017**
(21) Application number: 14702621.5
(22) Date of filing: 05.02.2014
(51) Int. Cl.: C08J 7/04, C09D 167/07, C09D 175/16

(54) **IMPROVED MAXIMUM PROCESSING TEMPERATURE OF PLASTIC SUBSTRATES USING HARD COATS**
VERBESSERTE VERARBEITUNGSHÖCHSTTEMPERATUR FÜR KUNSTSTOFFSUBSTRATE MIT HARTBESCHICHTUNGEN
TEMPÉRATURE DE TRAITEMENT MAXIMUM AMÉLIORÉE DE SUBSTRATS EN PLASTIQUE AU MOYEN DE REVÊTEMENTS DURS

(30) Priority: 08.02.2013 EP 13154582
(43) Date of publication of application: 16.12.2015
(73) Proprietor: Covestro Deutschland AG, 51373 Leverkusen (DE)
(72) Inventor: SCHMIDT, Axel, 50933 Köln (DE); DEIVARAJ, Theivanayagam Chairman, 40489 Düsseldorf (DE); MATHEW, Rachel Tessy, Singapore 120725 (SG); WANG, Zheng, Singapore 530972 (SG); KARTAWIDJAJA, Fransiska Cecilia, Singapore 323101 (SG); SIM, Shu Yin Sharon, Singapore 640694 (SG)
(74) Representative: Levpat
(86) International application number: PCT/EP2014/052201
(87) International publication number: WO 2014/122149

(56) References cited:
- US-A- 6 069 227
- US-A1- 2004 081 831
- US-A1- 2005 147 809
- US-A1- 2011 014 477

## Description

The present invention relates to the improvement of the maximum processing temperature of plastic substrates, in particular polymer films.

Maximum processing temperature (also known as upper working temperature / upper temperature for processing) of a plastic substrate or a polymer film is defined as the optimal temperature to which the polymer substrate could be subjected to without any apparent degradation to its physical or chemical nature (curling along the edges, deformation, warp, significant changes in the optical properties, melting, decomposition etc). Standard polycarbonate (T_{g} = 150°C) is known to have a maximum processing temperature of approximately 130 °C. However, emerging applications (especially those in the electronic or optoelectronic sector) and future trends in these markets indicate that polymer substrates ought to survive a plethora of process steps involving exposure to high temperature / solvents / etchants etc. Hence, the maximum processing temperature is one of the important criteria for polymer substrates if they were to be used in these emerging applications.

In addition, the maximum processing temperature of a polymer substrate (coated or uncoated) is largely thought to be a property associated with the properties of the polymer material. It is common knowledge that a coating on a polymer substrate is valuable to offer beneficial properties like abrasion resistance / higher pencil hardness etc.

GB 1096929 ( Crosslinkable Polymeric Molding Compositions; Inventor: Martin, John Edward) discloses the enhancement of working temperature of a molding composition by blending crosslinkable polymers/ monomers or oligomers.

Thus, it is the problem underlying the invention to improve the maximum processing temperature of a plastic substrate, in particular a polymer film which is made in particular of polycarbonate.

The above problem is solved by the use of a hard coat layer provided on at least one surface of a plastic substrate to increase the maximum processing temperature of said substrate, said processing temperature being defined as maximum temperature said coated substrate is subjected to without degradation to its physical and/ or chemical nature.

It was not obvious for a person skilled in the state of the art that the coating is suitable to improve the maximum processing temperature of such substrate.

This invention discloses that the maximum processing temperature of a polymer substrate could be enhanced by coating them with a suitable hard coat.

This invention teaches the possibility of enhancing the maximum processing temperature of a polymer substrate, in particular a film using in particular an acrylate based hard coat. A noticeable improvement up to about 30°C can be obtained as compared to that of an uncoated polymer film. After the thermal treatment, the optical properties of coated polymer substrate remains within acceptable levels and no deformation / excessive curling is noticed. This phenomenon is observed for a wide range of substrates (with varying T_{g}, surface texture (matte or gloss) & thicknesses) or coatings (varying formulations or thicknesses).

In particular polycarbonates are used for the purpose of this invention although other thermoplastic polymer materials may be used such as poly(methyl methacrylate), poly (butyl methacrylate) polyester such as polyethylene terephthalate (PET), polybutylene terephthalate, in particular, polyurethane, polyolefines, copolymers of acrylnitril-ethylen-propylendiene-stryrene (A-EPDM), polyetherimides, polyetherketones, polyphenylenesulfides, polyphenyleneethers, poly- or copolycondensates of terephthalic acid as e.g and preferably poly- or copolyethylene terephthalates (PET or CoPET), glycol-modified PET (PETG), glycol-modified poly- or copolycyclohexane dimethylene-terephthalate (PCTG), poly- or copolybutylene terephthalat (PBT or CoPBT) and other amorphous (co)polyesters and their blends, polyvinylidene fluoride, and/ or poly (vinyl chloride) being of particular relevance.

Further possible thermoplastic polymer materials can be polyethylene, polypropylene, polystyrene, polybutadiene, polyamide, polyether, polyvinylacetate or acetal, polyacrylnitrile, polyacetal, polyvinylalcohol, phenolic resins, urea resins, melamine resins, alkyd resins, epoxide resins or polyurethane, their block- or graft copolymeres and blends thereof.

In another embodiment of the invention the thermoplastic materials are ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-plastics (abbriviations pursuant to DIN 7728), aliphatic polyketones and their blends and mixtures.

In another embodiment of the invention, the thermoplastic materials are transparent such as polyacrylate, polymethyl(meth)acrylate (PMMA; Plexiglas® from Röhm), cycloolefinic-copolymere (COC; Topas® from Ticona); Zenoex® from Nippon Zeon or Apel® from Japan Synthetic Rubber), polysulfone (Ultrason@ from BASF or Udel® from Solvay), polyester, such as. PET or PEN, polycarbonate, polycarbonate/polyester-blends, e.g. PC/PET, polycarbonate/polycyclohexylmethanol-cyclohexanedicarboxylate (PCCD; Xylecs® from GE) and polycarbonate/polybutyleneterephthalate (PBT)blends.

Preferably polycarbonate, polyester or coextruded polycarbonate/polyester or PMMA are used. Suitable polycarbonates are preferably high molecular weight, thermoplastic, aromatic polycarbonates with M_{w} (weight average of the molecular weight) of at least 10 000, preferably from 20 000 to 300 000, which contain bifunctional carbonate structural units of formula (I), 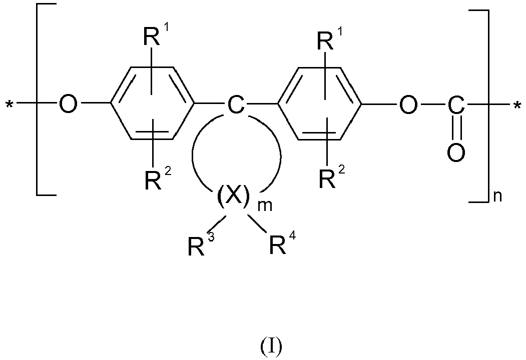 wherein
- R¹ and R²: independently of one another signify hydrogen, halogen, preferably chlorine or bromine, C₁-C₈ alkyl, C₅-C₆ cycloalkyl, C₆-C₁₀ aryl, preferably phenyl, and C₇-C₁₂ aralkyl, preferably phenyl-C₁-C₄-alkyl, particularly benzyl,
- m: signifies an integer of from 4 to 7, preferably 4 or 5,
- R³ and R⁴: may be selected for each X individually and, independently of one another, signify hydrogen or C₁-C₆ alkyl and
- X: signifies carbon, and
- n: signifies an integer of 30 or greater, particularly preferably an integer of from 50 to 900, most particularly preferably an integer of from 60 to 250,
with the proviso that, on at least one X atom, R³ and R⁴ simultaneously signify alkyl.

Starting products for the polycarbonates are dihydroxydiphenyl cycloalkanes of the formula (Ia) 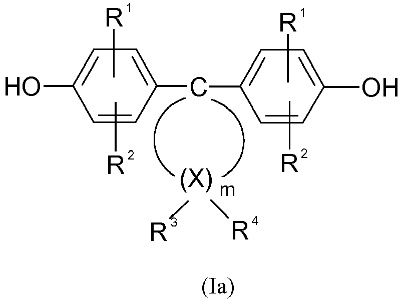 wherein
X, R¹, R², R³, R⁴, m and n have the meaning given for formula (I).

Preferably, R³ and R⁴ are simultaneously alkyl on one to two X atoms, particularly only on one X atom.

The preferred alkyl radical is methyl; the X atoms in alpha position to the diphenyl-substituted C atom (C-1) are preferably not dialkyl-substituted, however the alkyl disubstitution in beta position to C-1 is preferred.

Dihydroxydiphenyl cycloalkanes with 5 and 6 ring C atoms in the cycloaliphatic radical (m = 4 or 5 in formula (Ia)), e.g. the diphenols of formulae (Ib) to (Id), are preferred, 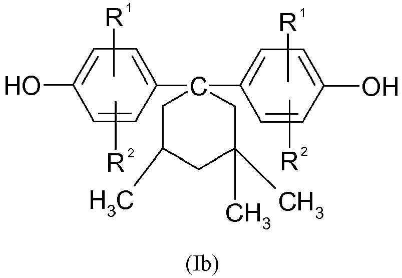 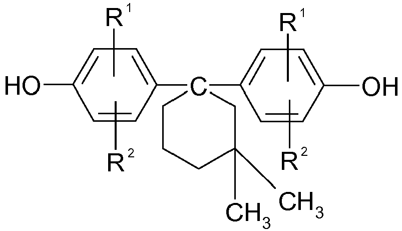 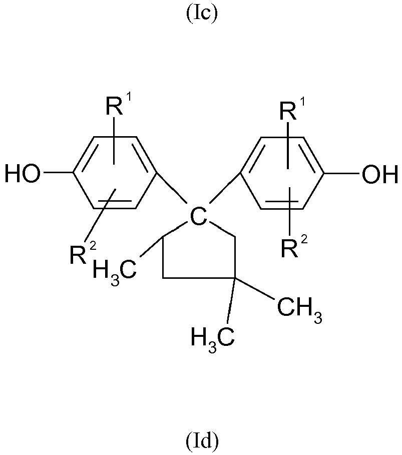 wherein 1,1-bis(4-hydroxyphenyl)-3,3,5-trimethylcyclohexane (formula (Ib) with R¹ and R² equal to H) is particularly preferred. The polycarbonates can be produced in accordance with German patent application no. DE 38 32396.6 or EP 0 359 953 A from diphenols of formula (Ia).

It is possible to use either one diphenol of formula (Ia) with the formation of homopolycarbonates or several diphenols of formula (Ia) with the formation of copolycarbonates.

In addition, the diphenols of formula (Ia) can also be used in a mixture with other diphenols, e.g. with those of formula (Ie)

HO-Z-OH (Ie),

for the production of high molecular weight, thermoplastic, aromatic polycarbonates.

Suitable other diphenols of formula (Ie) are those in which Z is an aromatic radical with 6 to 30 C atoms, which can contain one or more aromatic rings, can be substituted and can contain aliphatic radicals or cycloaliphatic radicals other than those of formula (Ia) or hetero atoms as bridge-type crosslinks.

Examples of the diphenols of formula (Ie) are: hydroquinone, resorcinol, dihydroxydiphenyls, bis-(hydroxyphenyl)alkanes, bis(hydroxyphenyl)cycloalkanes, bis(hydroxyphenyl) sulfides, bis-(hydroxyphenyl) ethers, bis(hydroxyphenyl) ketones, bis(hydroxyphenyl) sulfones, bis(hydroxyphenyl) sulfoxides, alpha,alpha'-bis(hydroxyphenyl) diisopropylbenzenes and the ring-alkylated and ring-halogenated compounds thereof.

These and other suitable diphenols are described e.g. in US-A 3 028 365, 2 999 835, 3 148 172, 3 275 601, 2 991 273, 3 271 367, 3 062 781, 2 970 131 and 2 999 846, in DE-A 1 570 703, 2 063 050, 2 063 052, 2 211 956, Fr-A 1 561 518 and in the monograph "H. Schnell, Chemistry and Physics of Polycarbonates, Interscience Publishers, New York 1964".

Preferred other diphenols are e.g.: 4,4'-dihydroxydiphenyl, 2,2-bis(4-hydroxyphenyl)propane, 2,4-bis(4-hydroxyphenyl)-2-methylbutane, 1,1-bis(4-hydroxyphenyl)cyclohexane, alpha,alpha-bis(4-hydroxyphenyl)-p-diisopropylbenzene, 2,2-bis(3-methyl-4-hydroxyphenyl)propane, 2,2-bis(3-chloro-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)cyclohexane, alpha,alpha-bis(3,5-dimethyl-4-hydroxyphenyl)-p-diisopropylbenzene, 2,2-bis(3,5-dichloro-4-hydroxyphenyl)propane and 2,2-bis(3,5-dibromo-4-hydroxyphenyl)propane.

Particularly preferred diphenols of formula (Ie) are e.g.: 2,2-bis(4-hydroxyphenyl)propane, 2,2-bis-(3,5-dimethyl-4-hydroxyphenyl)propane, 2,2-bis(3,5-dichloro-4-hydroxyphenyl)propane, 2,2-bis(3,5-dibromo-4-hydroxyphenyl)propane and 1,1-bis(4-hydroxyphenyl)cyclohexane.

In particular, 2,2-bis(4-hydroxyphenyl)propane is preferred. The other diphenols can be used either individually or in a mixture.

The molar ratio of diphenols of formula (Ia) to the other diphenols of formula (Ie) optionally also used, should be between 100 mole % (Ia) to 0 mole % (Ie) and 2 mole % (Ia) to 98 mole % (Ie), preferably between 100 mole % (Ia) to 0 mole % (Ie) and 10 mole % (Ia) to 90 mole % (Ie) and particularly between 100 mole % (Ia) to 0 mole % (Ie) and 30 mole % (Ia) to 70 mole % (Ie).

The high molecular weight polycarbonates made from the diphenols of formula (Ia), optionally in combination with other diphenols, can be produced by the known polycarbonate production processes. The various diphenols in this case can be connected to one another either randomly or in blocks.

The polycarbonates according to the invention can be branched in a manner that is known *per se.* If branching is desired, it can be achieved in a known manner by incorporation by condensation of small quantities, preferably quantities of between 0.05 and 2.0 mole % (based on diphenols used), of trifunctional or more than trifunctional compounds, particularly those with three or more than three phenolic hydroxyl groups. Suitable branching agents with three or more than three phenolic hydroxyl groups are:
phloroglucinol, 4,6-dimethyl-2,4,6-tri-(4-hydroxyphenyl)heptene-2, 4,6-dimethyl-2,4,6-tri-(4-hydroxyphenyl)heptane, 1,3,5-tri-(4-hydroxyphenyl)benzene, 1,1,-tri-(4-hydroxyphenyl)ethane, tri-(4-hydroxyphenyl)phenyhnethane, 2,2-bis-[4,4-bis(4-hydroxyphenyl)cyclohexyl]propane, 2,4-bis(4-hydroxyphenylisopropyl)phenol, 2,6-bis-(2-hydroxy-5-methylbenzyl)-4-methylphenol, 2-(4-hydroxyphenyl)-2-(2,4-dihydroxyphenyl)propane, hexa-[4-(4-hydroxyphenylisopropyl)phenyl]-orthoterephthalic acid ester, tetra-(4-hydroxyphenyl)methane, tetra-[4-(4-hydroxyphenyl-isopropyl)phenoxy]methane and 1,4-bis-[4',4"-dihydroxytriphenyl)methyl]benzene.

Some of the other trifunctional compounds are 2,4-dihydroxybenzoic acid, trimesic acid, cyanuric chloride and 3,3-bis(3-methyl-4-hydroxyphenyl)-2-oxo-2,3-dihydroindole.

As chain terminators for the regulation of the molecular weight of the polycarbonates, which is known per se, monofunctional compounds are used in conventional concentrates. Suitable compounds are e.g. phenol, tert.-butylphenols or other alkyl-substituted phenols. To regulate the molecular weight, small quantities of phenols of formula (If) are particularly suitable 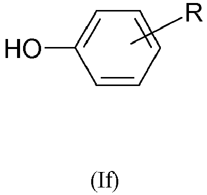 wherein
R represents a branched C₈ and/or C₉ alkyl radical.

The proportion of CH₃ protons in the alkyl radical R is preferably between 47 and 89% and the proportion of CH and CH₂ protons between 53 and 11%; it is also preferred for R to be in o- and/or p-position to the OH group, and particularly preferred for the upper limit of the ortho fraction to be 20%. The chain terminators are generally used in quantities of 0.5 to 10, preferably 1.5 to 8 mole %, based on diphenols used.

The polycarbonates can preferably be produced by the interfacial polycondensation process (cf. H. Schnell "Chemistry and Physics of Polycarbonates", Polymer Reviews, vol. IX, page 33ff., Interscience Publ. 1964) in a manner that is known per se.

In this process, the diphenols of formula (Ia) are dissolved in an aqueous alkaline phase. To produce copolycarbonates with other diphenols, mixtures of diphenols of formula (Ia) and the other diphenols, e.g. those of formula (Ie), are used. To regulate the molecular weight, chain terminators e.g. of formula (If) can be added. Then, in the presence of an inert organic phase, preferably one which dissolves polycarbonate, a reaction with phosgene is carried out by the interfacial polycondensation method. The reaction temperature is between 0°C and 40°C.

The branching agents that are optionally also used (preferably 0.05 to 2.0 mole %) can either be initially present in the aqueous alkaline phase with the diphenols or added in solution in the organic solvent before phosgenation. In addition to the diphenols of formula (Ia) and optionally other diphenols (Ie), it is also possible to incorporate their mono- and/or bischlorocarbonates, these being added in solution in organic solvents. The quantity of chain terminators and branching agents then depends on the molar amount of diphenolate groups according to formula (Ia) and optionally formula (Ie); when chlorocarbonates are incorporated, the amount of phosgene can be reduced accordingly in a known manner.

Suitable organic solvents for the chain terminators and optionally for the branching agents and the chlorocarbonates are e.g. methylene chloride and chlorobenzene, particularly mixtures of methylene chloride and chlorobenzene. The chain terminators and branching agents used may optionally be dissolved in the same solvent.

Methylene chloride, chlorobenzene and mixtures of methylene chloride and chlorobenzene, for example, are used as the organic phase for the interfacial polycondensation.

NaOH solution, for example, is used as the aqueous alkaline phase. The production of the polycarbonates by the interfacial polycondensation process can be catalysed in a conventional manner by catalysts such as tertiary amines, particularly tertiary aliphatic amines such as tributylamine or triethylamine; the catalysts can be used in quantities of from 0.05 to 10 mole %, based on moles of diphenols used. The catalysts can be added before the beginning of phosgenation or during or even after phosgenation.

The polycarbonates can be produced by the known process in the homogeneous phase, the so-called "pyridine process", and by the known melt transesterification process using, for example, diphenyl carbonate instead of phosgene.

The polycarbonates preferably have a molecular weight M_{w} (weight average, determined by gel permeation chromatography after previous calibration) of at least 10 000, particularly preferably from 20 000 to 300 000 and particularly from 20 000 to 80 000. They can be linear or branched and they are homopolycarbonates or copolycarbonates based on the diphenols of formula (Ia).

By means of the incorporation of the diphenols of formula (Ia), novel polycarbonates with high heat resistance have been created, which also have a good property profile in other respects. This is particularly true of the polycarbonates based on the diphenols of formula (Ia) in which m is 4 or 5, and most particularly for the polycarbonates based on the diphenols (Ib), wherein R¹ and R² independently of one another have the meaning given for formula (Ia) and are particularly preferably hydrogen.

The particularly preferred polycarbonates are therefore those in which structural units of formula (I) m = 4 or 5, most particularly those of units of formula (Ig) 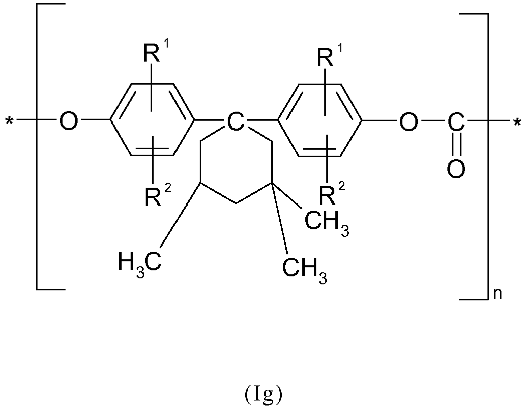 wherein R¹, R² and n have the meaning given for formula (I) but are particularly preferably hydrogen.

These polycarbonates based on diphenols of formula (Ib), wherein in particular R¹ and R² are hydrogen, possess, in addition to their high heat resistance, good UV stability and good flow properties in the melt, which was not to be expected, and display very good solubility in the monomers mentioned below.

In addition, by means of composition with other diphenols as desired, particularly with those of formula (Ie), the polycarbonate properties can be favourably varied. In these copolycarbonates, the diphenols of formula (Ia) are contained in quantities of from 100 mole % to 2 mole %, preferably in quantities of from 100 mole % to 10 mole % and particularly in quantities of from 100 mole % to 30 mole %, based on the total quantity of 100 mole % of diphenol units, in polycarbonates.

Particularly preferred polycarbonates are copolycarbonates of formula (I-h), wherein the comonomers can be in an alternating, block or random arrangement in the copolymer, p + q = n and the ratio of q and p to one another behaves as reflected by the mole % data mentioned in the previous section for formulae (Ie) and (Ia).

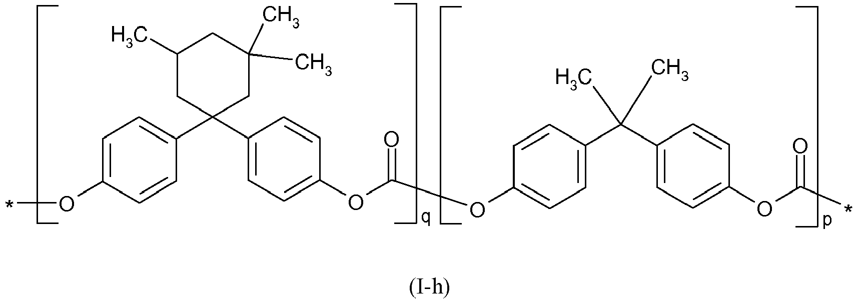

In an embodiment of the invention the thermoplastic material is in the form of a film with a thickness of 10 to 1000 µm, preferably from 50 to 350 µm, especially preferred between 75 to 175 µm.

The thickness of the hard mat layer is preferably 3-15 µm, and more preferably 3-10 µm. If the thickness of the bard coat layer is less than 3 µm, the pencil hardness will be insufficient for a hard coat film, and if it is over 15 µm the pencil hardness will be improved but cracking and peeling will more readily occur. For a high pencil hardness of the hard coat film, the pencil hardness of the hard coat layer is preferably in the range of 3H-5H.

As materials for forming the hard coat layer there may be mentioned ionizing radiation curing resins, thermosetting resins, thermoplastic resins and engineering plastics, Ionizing radiation curing resins arc preferred because they can be easily formed into films on plastic base films and can easily give the desired high pencil hardness values.

The following may be mentioned as ionizing radiation curing resins which can be used for the hard coat layer or the buffer layer.

The ionizing radiation curing resin is preferably one with an acrylate-based functional group, and more preferably a polyester acrylate or urethane acrylate. A polyester acrylate in this ease preferably consists of an acrylate or methacrylate (throughout the present specification, acrylates and/or methacrylates will be referred to simply as (meth)acrylates) of a polyester-based polyol oligomer, or a mixture thereof. A urethane acrylate is a compound obtained by acrylating an oligomer made from a diisocyanate compound and a polyol compound.

As preferred acrylate-composing monomers there may be mentioned methyl (meth)acrylate, ethyl (meth)acrylate, butyl (meth)acrylate, 2-ethylhexyl (meth)acrylate, methoxyethyl (meth)acrylate, butoxyethyl (meth)acrylate and phenyl (meth)acrylate.

At the same time, a polyfunctional monomer may also be used to provide even greater hardness to the coaling. Preferred examples of polyfunctional monomers include trimethylolpropane tri(meth)acrylate, hexanediol (meth)acrylate, tripropyleneglycol di(meth)acrylate, diethyleneglycol di(meth)acrylate, pentaerythritol tri(meth)acrylate, dipentaerythritol hexa(meth)acrylate, 1,6-hexanediol di(meth)acrylate and neopentylglycol di(meth)acrylate.

Preferred examples of polyester-based oligomers include polyadipate polyols and polysebacate polyols, which are condensation products of adipic acid and glycols (ethylene glycol, polyethylene glycol, propylene glycol, polypropylene glycol, butylene glycol, polybutylene glycol, etc.) or triols (glycerin, trimethylolpropane, etc.), and sebacic acid and glycols or triols.

A part or all of the aliphatic dicarboxylic acids mentioned above may be replaced with other organic acids. For example, isophthalic acid, terephthalic acid, phthalic anhydride or the like may be used as a constituent to provide greater hardness. Polyurethane-based oligomers can be obtained from condensation products of polyisocyanates and polyols. For example, they may be obtained by reaction between a compound selected from among methylenebis(p-phenylene diisocyanate) and hexamethylene diisocyanate hexanediol addition products, hexamethylene diisocyanate, tolylene diisocyanate and tolylene diisocyanate trimethylolpropane adducts, 1,5-naphthylene diisocyanate, thiopropyl diisocyanate, ethylbenzene-2,4-diisocyanate, 2,4-tolylenediisocyanate dimers, hydrogenated xylylene diisocyanate, tris(4-phenylisocyanate) neophosphate, etc. and one of the following polyols.

Preferred examples of polyols include polyether-based polyols such as polyoxytetramethylene glycols; polyester-based polyols such as polyadipate polyols, polycarbonate polyols; and copolymers of acrylic acid esters and hydroxyethyl methacrylate, etc.

In addition, when an ionizing radiation curing resin is used as the ultraviolet curing resin, a photopolymerizing agent such as an α-amyloxym ester or thioxanthone, or a photosensitizing agent such as n-butylamine, triethylamine or tri-n-butylphosphine may be used in combination.

Urethane acrylates have high elasticity and flexibility and therefore offer superior workability (bendability), but they cannot give products with a pencil hardness of 2H or higher because of their poor surface hardness. On the other hand, polyester acrylates can provide hardness if the polyester constituents are appropriately selected.

In order to obtain a flexible hard coat film, it is preferred to add 40-10 parts by weight of a polyester acrylate to 60-90 parts by weight of a urethane acrylate, as this will give a hard coat film with both high hardness and flexibility.

In another embodiment of the invention inorganic fine particles with a mean secondary particle size of 20 µm or less and preferably in the range of 0.1-15 µm are preferably added to the application solution at an amount of 0,3 to 3 parts by weight to 100 parts by weight of the resin component in order to adjust the luster and provide the surface with lubricity (not releasability). At less than 0,3 parts by weight it is impossible to provide the desired lubricity, and at greater than 3 parts by weight the pencil hardness may be lowered. The fine particles used may be inorganic fine particles of silica, magnesium carbonate, aluminum hydroxide or barium sulfate, or even fine particles of an organic polymer such as a polycarbonate, acrylic (resin), polyimide, polyamide, polyethylene naphthalate or melamine (resin). In case of organic particles an amount of 0,01 to 1 weight %, preferably 0,02 to 0,8 weight %, most preferably 0.05 weight % is used.

Notably, the optical properties are retained and no excessive curling is noticed. Furthermore, it must be noted that such an improvement is noticed for:
a) a wide range of formulations containing different acrylate based binders or reactive diluents,
b) coating thicknesses ranging preferably from 2 to 8 µm
c) substrates with different T_{g} (140 / 185 / 205 °C) or texture (gloss-gloss / gloss-micro matt films)

These observations point to the versatility of the phenomenon.

This invention provides sufficient data to support the claim that by hard coating a polymer substrate, in particular polycarbonate the maximum processing temperature could be enhanced to a significant extent. This improvement shall allow the subsequent users of these films to process these films at a higher temperature, which otherwise would not have been possible.

### Examples:

Desmolux^{®} U680H, Desmolux^{®} XP 2738 urethane acrylic resin binders, polycarbonate substrates used for coating, namely DE 202 1-M (polycarbonate film with one side gloss and one side micro-matte for printability, the glossy side has gloss values at 60° of over 90 gloss units and a surface roughness R3z of ≤ 0,5 µm and the matt side has a surface roughness R3z of < 6,0 µm), DE 202 1-1 (polycarbonate film with both sides glossy, gloss values at 60° of over 90 gloss units and surface roughness R3z of ≤ 0,5 µm on both sides of the film), were received from Bayer MaterialScience AG., penta erythritol tri and tetra-acrylate (PETIA, Etermer^{®} 235) was received from Eternal Chemical Co., Taiwan. Hexanediol diacrylate (Laromer^{®}, HDDA) was purchased from BASF Corporation. Ebecryl^{®} 1200 binder resin is an acrylic acrylate with dilution 45 BuAc, viscosity of 3000, molecular weight of >10000, density of 1,07, functionality of 10 and Additol^{®} VXL 4930 additive, a modified silicone for improvement of levelling and surface smoothness of solvent containing and aqueous paints with active substance 40 %, were received from Cytec Industries Inc. Additives BYK^{®} 306, a solution of a polyether modified polydimethylsiloxane, and Irgacure^{®} 184, a non-yellowing photoinitiator (1-Hydroxy-cyclohexyl-phenyl-ketone), and Irganox^{®} 5057, Benzenamine,N-phenyl-, reaction products with 2,4,4-trimethylpentene, functions as an antioxidant were received from BYK-Chemie GmbH and Ciba Specialty Chemicals, respectively. The solvents namely ethyl acetate (EA) and isopropanol (IPA) were received from Sigma Aldrich and another solvent namely, propylene glycol monomethyl ether (PGME) was obtained from CLP International Pte.Ltd. All chemicals were used as received.

The formulation depicted in the following examples was coated on a polycarbonate substrate using a Meyer rod fitted to an automated film applicator (typical coating speed: 30 mm/sec). Suitable Meyer rod was selected considering the desired dry film thickness of the coating. Upon coating the sample, the solvent was evaporated in a conventional drying oven. These samples were then cured using UV irradiation at the UV curing machine. The total energy used was 2400 mJ/ cm² (3 steps of 800mJ/cm² each).

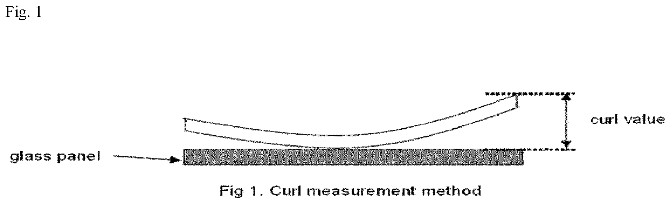

The films thus obtained were subjected to visual inspection for the cosmetic appearance, followed by measurement using the Hunterlab^{®}-UltraScan PRO spectrophotometer for determining the light transmission (LT), haze and yellow index. The maximum processing temperature of samples was determined using an internal standard test method. Samples of dimension of 15 x 15 cm² was placed on a glass plate and treated at the specified temperatures for a given period of time. After which, the samples were allowed to cool and inspected for any visual defects and curling. The extent of curling of the sample at the edges is measured using a ruler (Figure 1). The optical properties were also measured for the heat treated samples using the Hunterlab^{®}-UltraScan PRO spectrophotometer.

The coating of substrates using various formulations were sometimes carried out using a roll to roll process, whereby the thickness of coating is controlled by manipulating the web speed of the coating line.

### Example 1: Preparation of Formulation 1 (Petia: HDDA =50:50)

50 weight % (wt%) of PETIA (primary binder), 50 wt % of HDDA (diluent), 5 parts per hundred. (phr) of the photo initiator Irgacure 184 ,0.3phr of the leveling additive BYK 306 were mixed together using a Thinky ARE-310 mixer at 2000 rpm for 5 minutes, followed by de-foaming at 2200 rpm for 30 seconds. This mixture represents the 100% solids for the resin. The resin was further diluted to 40% solids by mixing with IPA and EA in the ratio IPA:EA=70:30 (wt%). This diluted resin was homogenized using the Thinky ARE-310 mixer at 2000 rpm for 5 minutes, followed by de-foaming at 2200 rpm for 30 seconds. The solid content was confirmed using a Mettler Toledo Halogen Moisture Analyzer HB43-S.

### Example 2: Preparation of Formulation 2 (PETIA: HDDA =40:60)

Procedure in Example 1 was followed, the only change being the binder ratios of PETIA and HDDA as 40:60.

### Example 3: Preparation of Formulation 3 (PETIA: Desmolux U680H =75:25)

Procedure in Example 1 was followed, the only change being the binder ratios of PETIA and Desmolux^{®} U680H as 75:25.

### Example 4: Preparation of Formulation 4(PETIA: Desmolux^{®} U680H =50:50)

Procedure in Example 1 was followed, the only change being the binder ratios of PETIA and Desmolux^{®} U680H as 50:50.

### Example 5: Preparation of Formulation 5(PETIA: Desmolux^{®} U680H =40:60)

Procedure in Example 1 was followed, the only change being the binder ratios of PETIA and Desmolux^{®} U680H as 40:60.

### Example 6: Preparation of Formulation 6(PETIA: Desmolux^{®} U680H =30:70)

Procedure in Example 1 was followed, the only change being the binder ratios of PETIA and Desmolux^{®} U680H as 30:70.

### Example 7: Preparation of Formulation 7(PETIA: Desmolux^{®} U680H =25:75)

Procedure in Example 1 was followed, the only change being the binder ratios of PETIA and Desmolux^{®} U680H as 25:75.

### Example 8: Preparation of Formulation 8(Ebecry^{®} 1200: HDDA = 70:30)

Procedure in Example 1 was followed, the only change being the binder ratios of Ebecryl^{®} 1200 and HDDA as 70:30.

### Example 9: Preparation of Formulation 9(Ebecry^{®} 1200: HDDA = 80:20)

Procedure in Example 1 was followed, the only change being the binder ratios of Ebecryl^{®} 1200 and HDDA as 80:20.

### Example 10: Preparation of Formulation 10(PETIA: HDDA = 60:40)

Procedure in Example 1 was followed, the only change being the binder ratios of PETIA and HDDA as 60:40.

### Example 11: Preparation of Formulation is 1 (Desmolux^{®} U680H: HDDA = 60:40)

Procedure in Example 1 was followed, the only change being the binder ratios of Desmolux^{®} U680H and HDDA as 60:40.

### Example 12: Preparation of Formulation 12(PETIA:HDDA:Desmolux^{®} XP2738=80:10:10)

80 wt % of PETIA (primary binder), 10 wt % of HDDA (diluent), 10 wt % of Desmolux^{®} XP2738, 5 parts per hundred. (phr) of the photo initiator Irgacure^{®} 184, 0.7 phr of BYK 306 were mixed together using a Thinky ARE-310 mixer at 2000 rpm for 5 minutes followed by de-foaming at 2200 rpm for 30 seconds. This mixture represents the 100% solids for the resin. This was diluted to 20% solids using Propylene Glycol Monomethyl Ether solvent. This diluted resin was again homogenized using the Thinky ARE-310 mixer at 2000 rpm for 5 minutes followed by de-foaming at 2200 rpm for 30 seconds.

### Example 13: Preparation of Formulation 13(PETIA:HDDA:Desmolux^{®} XP2738=80:00:20)

Procedure in Example 12 was followed, mixing the binder resins namely, PETIA and Desmolux^{®} XP2738 in the above mentioned ratio to make up to 100% solids. This was diluted to 20% solids using Propylene Glycol Monomethyl Ether solvent. The additive BYK 306 was replaced by Additol^{®} VXL 4930 and Irganox^{®} 5057 at concentrations of 0.05 phr and 0.2 phr respectively.

### Example 14: Preparation of Formulation 14(PETIA:HDDA:Desmolux^{®} XP2738=60:20:20)

Procedure in Example 12 was followed, mixing the binder resins namely, PETIA and Desmolux^{®} XP2738 in the above mentioned ratio to make up to 100% solids. This was diluted to 30% solids using Propylene Glycol Monomethyl Ether solvent. The additive BYK^{®} 306 was not used.

### Example 15: Preparation of Formulation 16(PETIA:HDDA:Desmolux^{®} XP2738=65:25:10)

Procedure in Example 12 was followed, mixing the binder resins namely, PETIA and Desmolux^{®} XP2738 in the above mentioned ratio to make up to 100% solids. This was diluted to 30% solids using Propylene Glycol Monomethyl Ether solvent. The additive BYK^{®} 306 was replaced with Additol^{®} VXL 4930 at a concentration of 0.2 phr.

### Example 16: Preparation of Formulation 17(PETIA:HDDA:Desmolux^{®} XP2738=75:15:10)

Procedure in Example 12 was followed, mixing the binder resins namely, PETIA and Desmolux^{®} XP2738 in the above mentioned ratio to make up to 100% solids. This was diluted to 30% solids using Propylene Glycol Monomethyl Ether solvent. The concentration of BYK^{®} 306 was 0.7 phr.

### Example 17: Preparation of Formulation 18(PETIA:HDDA:Desmolux^{®} XP2738=85:05:10)

Procedure in Example 12 was followed, mixing the binder resins namely, PETIA and Desmolux^{®} XP2738 in the above mentioned ratio to make up to 100% solids. This was diluted to 30% solids using Propylene Glycol Monomethyl Ether solvent. The concentration of the additive BYK^{®} 306 was changed to 0.7 phr.

### Example 18: Preparation of Formulation 19(PETIA:HDDA:Desmolux^{®} XP2738=90:10:10)

Procedure in Example 12 was followed, mixing the binder resins namely, PETIA and Desmolux^{®} XP2738 in the above mentioned ratio to make up to 100% solids. This was diluted to 30% solids using Propylene Glycol Monomethyl Ether solvent. The concentration of the additive BYK 306 was changed to 0.7 phr.

Tables 1 to 5 list the test conditions and influence of the temperature treatment over optical properties and curling of the films for various substrates, time duration, coating formulations and coating thicknesses.

For instance, through Table 1, it could be derived that the maximum processing temperature of the uncoated DE 202 - 000000 (1 - M; 175 µm) substrate is 180 °C and 170 °C for 2 and 5 hours, respectively. Beyond this temperature, the film deforms or shows excessive curling / wobbling. Needless to say, such a failure renders the film useless for applications which shall warrant the temperature treatment. However, by coating the film with an acrylate hard coat enhances the maximum processing temperature by 10 - 30 °C for both 2 and 5 hour test durations. Similar conclusions could be easily derived from Tables 2 to 5.

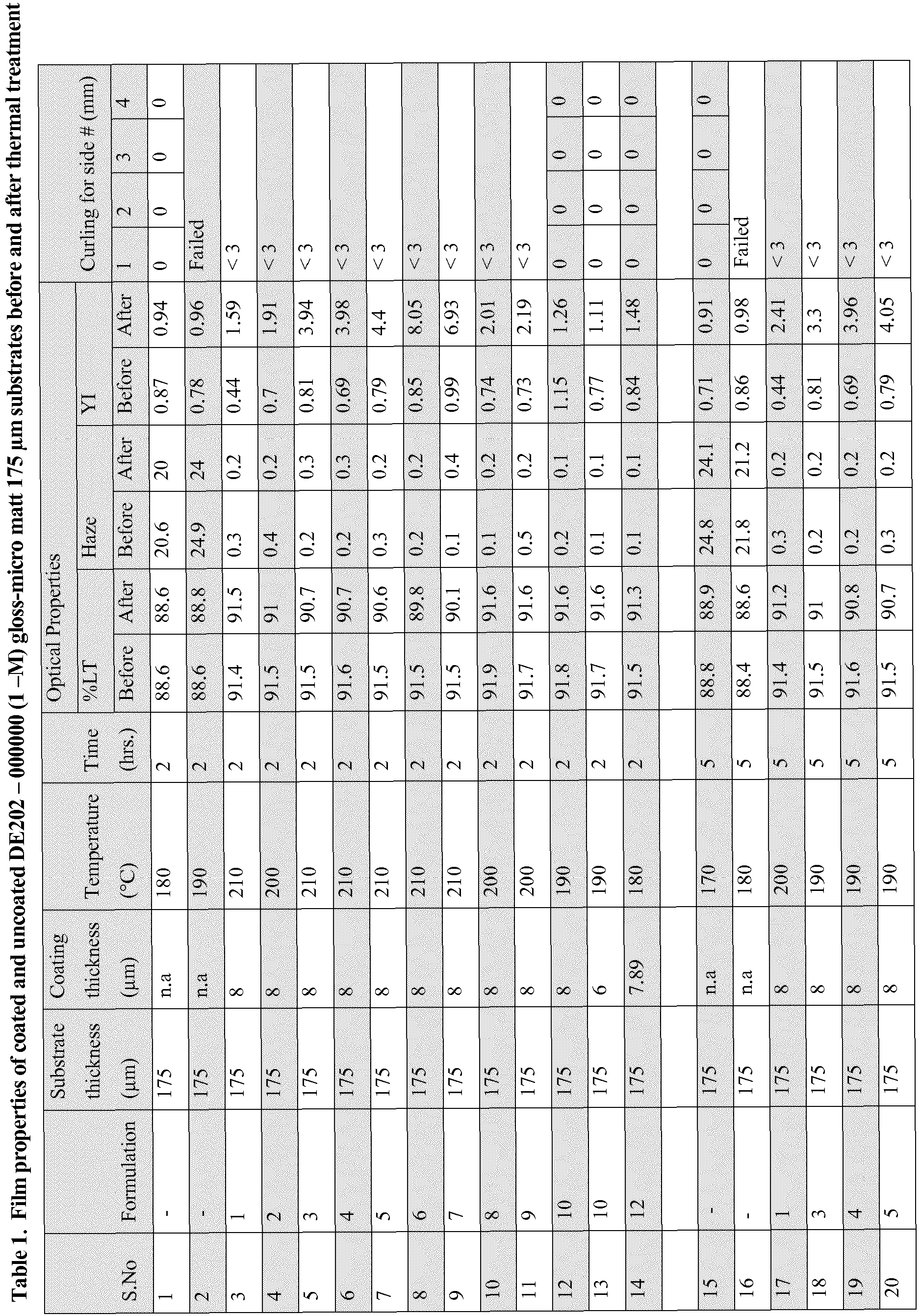

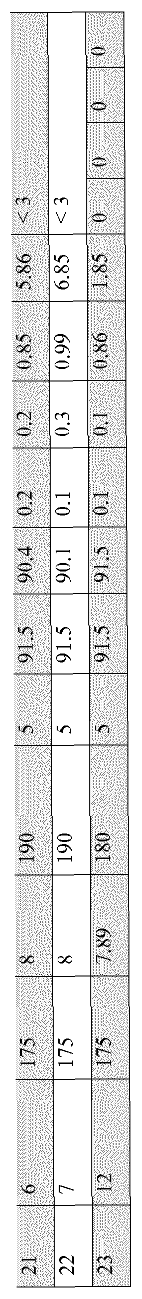

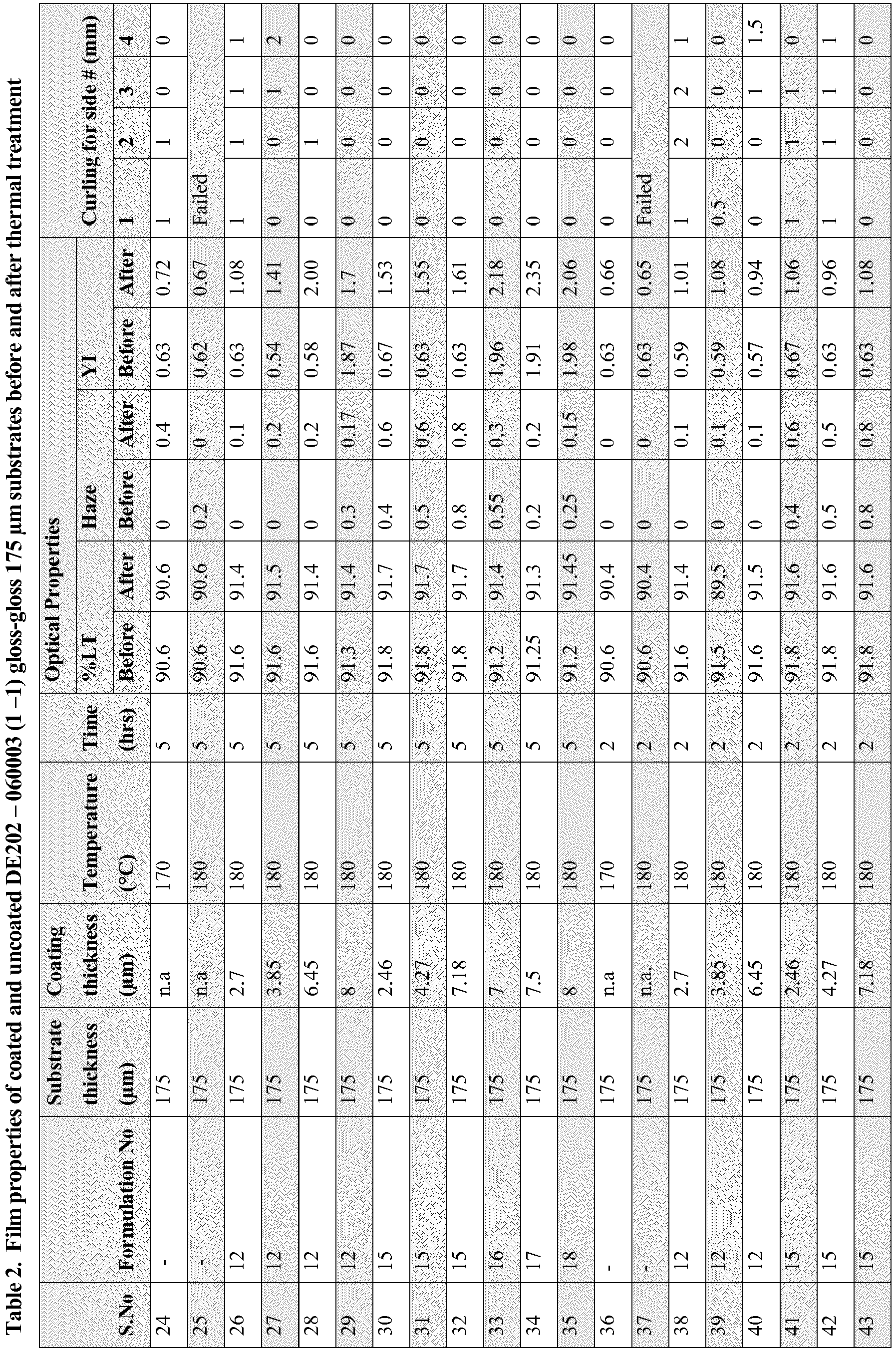

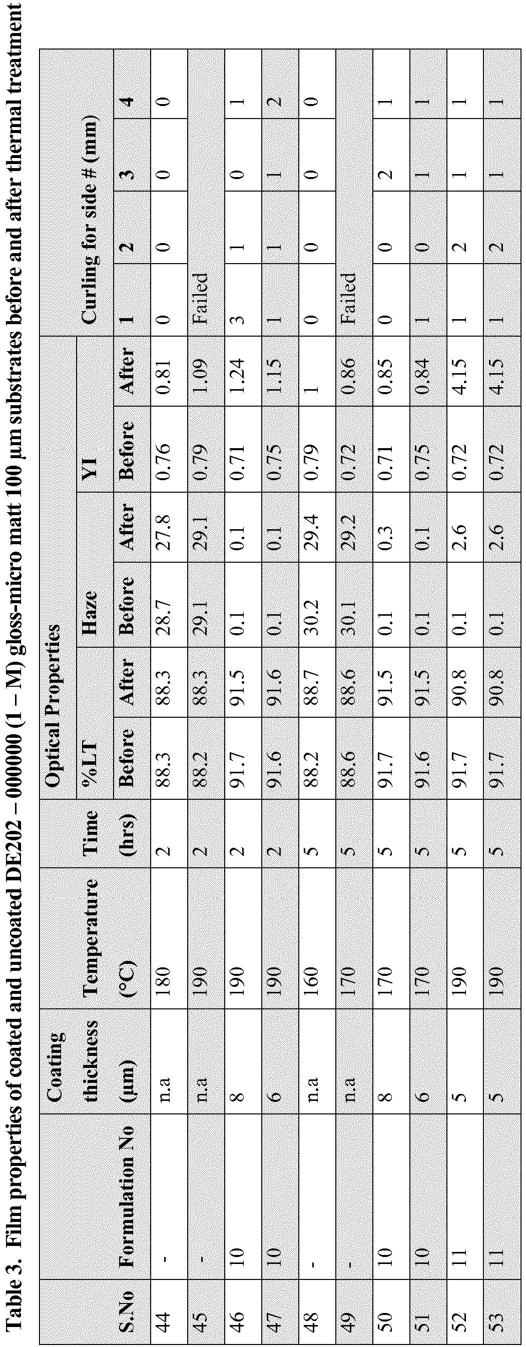

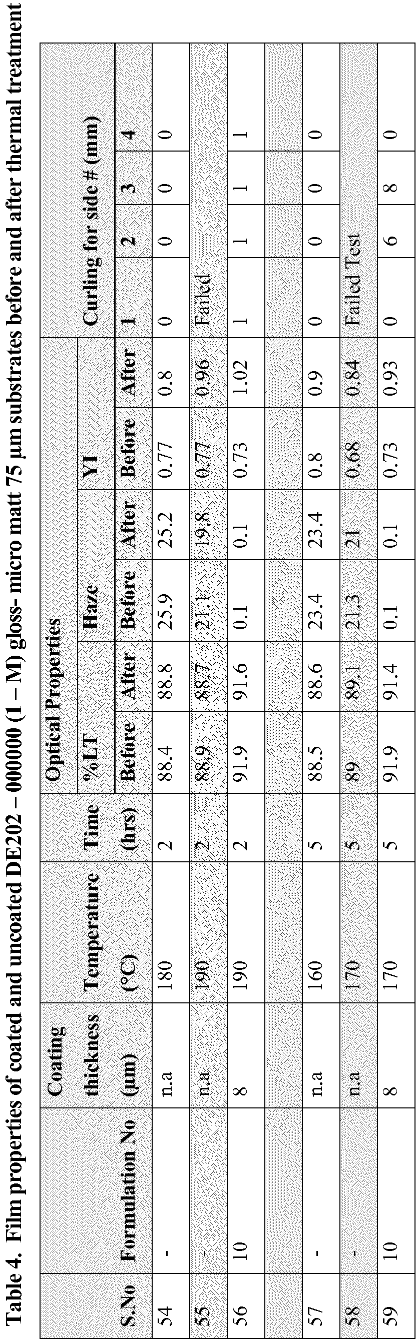

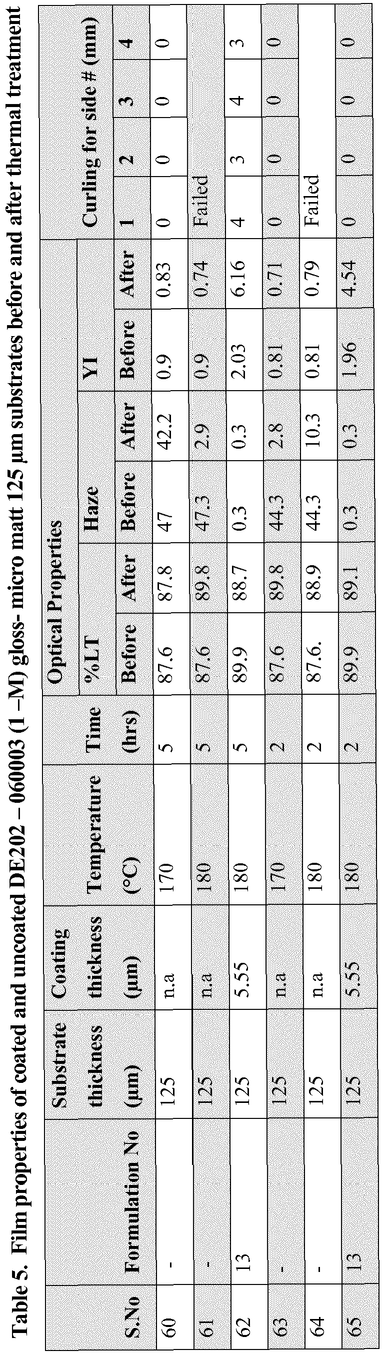

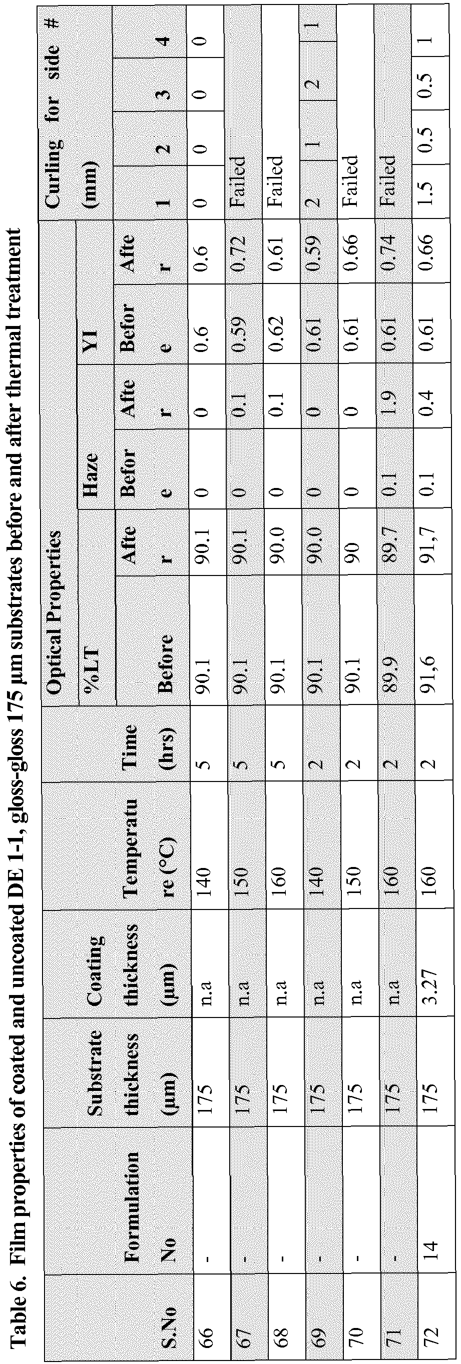

## Claims

1. Use of a hard coat layer provided on at least one surface of a plastic substrate to increase the maximum processing temperature of said substrate, said processing temperature being defined as maximum temperature said coated substrate could be subjected to without degradation to its physical and/ or chemical nature.

2. Use according to claim 1, wherein said plastic substrate is a plastic film.

3. Use according to claim 1 or 2, wherein said plastic substrate is made of polycarbonate.

4. Use according to claim 3, wherein said polycarbonate is a high molecular weight, thermoplastic, aromatic polycarbonate with M_{w} (weight average of the molecular weight) of at least 10 000, preferably from 20 000 to 300 000, which contain bifunctional carbonate structural units of formula (I), 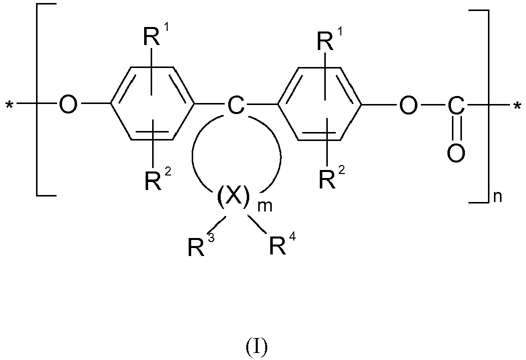 wherein
R¹ and R² independently of one another signify hydrogen, halogen, preferably chlorine or bromine, C₁-C₈ alkyl, C₅-C₆ cycloalkyl, C₆-C₁₀ aryl, preferably phenyl, and C₇-C₁₂ aralkyl, preferably phenyl-C₁-C₄-alkyl, particularly benzyl,
m signifies an integer of from 4 to 7, preferably 4 or 5,
R³ and R⁴ may be selected for each X individually and, independently of one another, signify hydrogen or C₁-C₆ alkyl and
X signifies carbon, and
n signifies an integer of 30 or greater, particularly preferably an integer of from 50 to 900, most particularly preferably an integer of from 60 to 250,
with the proviso that, on at least one X atom, R³ and R⁴ simultaneously signify alkyl.

5. Use according to claim 3, wherein the starting products for said polycarbonate are dihydroxydiphenyl cycloalkanes of the formula (Ia) 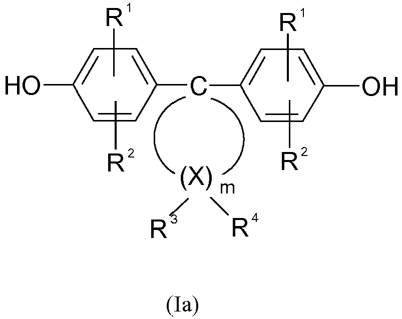 wherein
X, R¹, R², R³, R⁴, m and n have the meaning given for formula (I).
Preferably, R³ and R⁴ are simultaneously alkyl on one to two X atoms, particularly only on one X atom.

6. Use according to claim 5, wherein said alkyl radical is methyl; the X atoms in alpha position to the diphenyl-substituted C atom (C-1) are not dialkyl-substituted, however with the alkyl disubstitution in beta position to C-1.

7. Use according to claim 5, **characterized by** dihydroxydiphenyl cycloalkanes with 5 and 6 ring C atoms in the cycloaliphatic radical (m = 4 or 5 in formula (Ia)), in particular in the diphenols of formulae (Ib) to (Id) 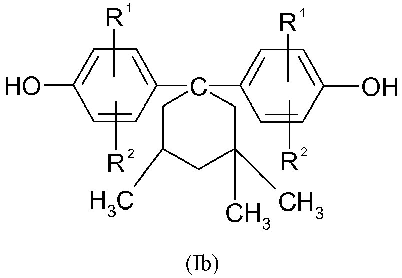 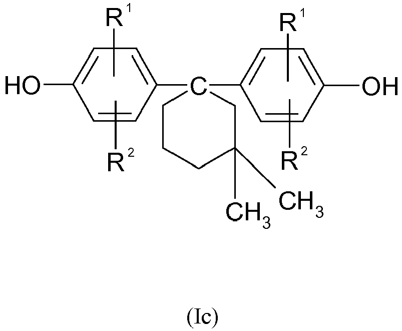 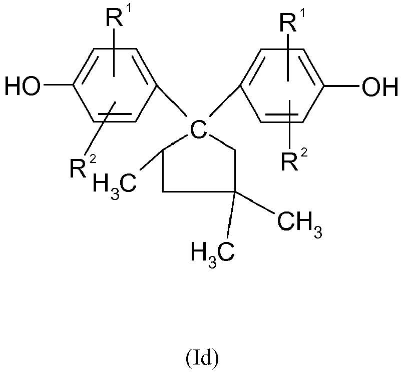 wherein 1,1-bis(4-hydroxyphenyl)-3,3,5-trimethylcyclohexane (formula (Ib) with R¹ and R² equal to H).

8. Use according to anyone of claims 1 to 7, wherein said substrate is made of poly(methyl methacrylate), polyester, in particular PET, coextruded polycarbonate/polyester polyurethane and/ or poly (vinyl chloride).

9. Use according to anyone of claims 1 to 8 wherein said hard coat has a thicknesses ranging from 2 to 8 µm.

## Patentansprüche

1. Verwendung einer Hartbeschichtungslage, die auf mindestens einer Fläche eines Kunststoffsubstrats bereitgestellt wird, um die maximale Verarbeitungstemperatur dieses Substrats zu erhöhen, wobei die Verarbeitungstemperatur als maximale Temperatur definiert ist, welcher das beschichtete Substrat ausgesetzt werden könnte, ohne dass sich seine physikalische und/oder chemische Beschaffenheit nachteilig verändert.

2. Verwendung nach Anspruch 1, wobei es sich bei dem Kunststoffsubstrat um eine Kunststofffolie handelt.

3. Verwendung nach Anspruch 1 oder 2, wobei das Kunststoffsubstrat aus Polycarbonat hergestellt ist.

4. Verwendung nach Anspruch 3, wobei es sich bei dem Polycarbonat um ein hochmolekulares, thermoplastisches, aromatisches Polycarbonat mit einem M_{w} (Gewichtsmittel des Molekulargewichts) von mindestens 10.000, vorzugsweise von 20.000 bis 300.000, handelt, welches bifunktionelle Carbonat-Bausteine nach Formel (I) enthält 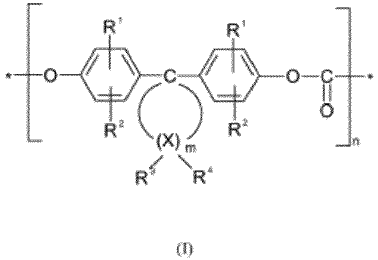 wobei
R¹ und R² unabhängig voneinander für Wasserstoff, Halogen, vorzugsweise Chlor oder Brom, C₁-C₈-Alkyl, C₅-C₆-Cycloalkyl, C₆-C₁₀-Aryl, vorzugsweise Phenyl, und C₇-C₁₂-Aralkyl, vorzugsweise Phenyl-C₁-C₄-Alkyl, insbesondere Benzyl stehen,
m für eine ganze Zahl von 4 bis 7, vorzugsweise für 4 oder 5, steht,
R³ und R⁴ für jedes X einzeln und unabhängig voneinander für Wasserstoff oder C₁-C₆-Alkyl stehen können, und
X für Kohlenstoff steht, und
n für eine ganze Zahl von 30 oder mehr, mit besonderem Vorzug eine ganze Zahl von 50 bis 900, mit dem größten Vorzug eine ganze Zahl von 60 bis 250 steht,
mit der Maßgabe, dass an mindestens einem X-Atom sowohl R³ als auch R⁴ für Alkyl stehen.

5. Verwendung nach Anspruch 3, wobei es sich bei den Ausgangsstoffen für das Polycarbonat um Dihydroxydiphenylcycloalkane der Formel (Ia) handelt 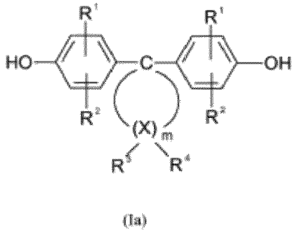 wobei
X, R¹, R², R³, R⁴, m und n dieselbe Bedeutung haben, die für Formel (I) angegeben ist.
Vorzugsweise stehen an einem oder zwei X-Atomen sowohl R³ als auch R⁴ für Alkyl, insbesondere an nur an einem X-Atom.

6. Verwendung nach Anspruch 5, wobei es sich bei dem Alkylrest um Methyl handelt; die X-Atome in alpha-Stellung zum diphenylsubstituierten C-Atom (C-1) nicht dialkylsubstituiert sind, wobei jedoch in der beta-Stellung zu C-1 eine Alkyldisubstitution vorliegt.

7. Verwendung nach Anspruch 5, **gekennzeichnet durch** Dihydroxydiphenylcycloalkane mit 5 bzw. 6 ringständigen C-Atomen im cycloaliphatischen Rest (m = 4 oder 5 in Formel (Ia)), insbesondere in den Diphenolen der Formeln (Ib) bis (Id) 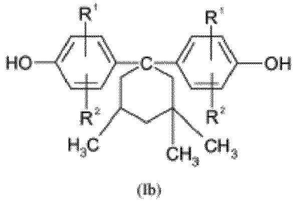 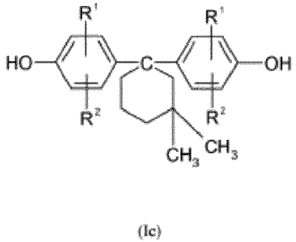 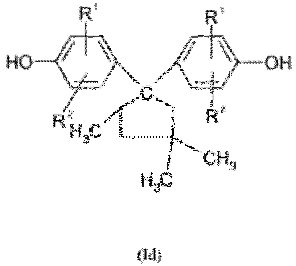 wobei 1,1-bis(4-Hydroxyphenyl)-3,3,5-trimethylcyclohexan (Formel (Ib) mit R¹ und R² gleich H).

8. Verwendung nach einem beliebigen der Ansprüche 1 bis 7, wobei das Substrat aus Polymethylmethacrylat, Polyester, insbesondere PET, coextrudiertem Polycarbonat/Polyester-Polyurethan und/oder Polyvinylchlorid hergestellt ist.

9. Verwendung nach einem beliebigen der Ansprüche 1 bis 8, wobei die Hartbeschichtung eine Dicke im Bereich von 2 bis 8 µm aufweist.

## Revendications

1. Utilisation d'une couche de revêtement dur disposée sur au moins une surface d'un substrat en plastique pour augmenter la température de traitement maximale dudit substrat, ladite température de traitement étant définie comme la température maximale à laquelle ledit substrat revêtu pourrait être soumis sans dégradation de sa nature physique et/ou chimique.

2. Utilisation selon la revendication 1, dans laquelle ledit substrat en plastique est un film en plastique.

3. Utilisation selon la revendication 1 ou 2, dans laquelle ledit substrat en plastique est constitué de polycarbonate.

4. Utilisation selon la revendication 3, dans laquelle ledit polycarbonate est un polycarbonate aromatique thermoplastique à haut poids moléculaire avec un M_{w} (moyenne en poids du poids moléculaire) d'au moins 10 000, de préférence de 20 000 à 300 000, qui contient des motifs structuraux de carbonate bifonctionnels de formule (I), 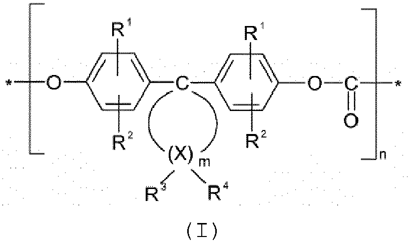 dans laquelle
R¹ et R² représentent indépendamment l'un de l'autre un hydrogène, un halogène, de préférence un chlore ou un brome, un alkyle en C₁-C₈, un cycloalkyle en C₅-C₆, un aryle en C₆-C₁₀, de préférence un phényle, ou un aralkyle en C₇-C₁₂, de préférence un phényl-alkyle en C₁-C₄, en particulier un benzyle,
m représente un entier de 4 à 7, de préférence 4 ou 5,
R³ et R⁴ peuvent être choisis pour chaque X individuellement, et représentent indépendamment l'un de l'autre un hydrogène ou un alkyle en C₁-C₆, et
X représente un carbone, et
n représente un entier valant 30 ou plus, de préférence un entier de 50 à 900, idéalement un entier de 60 à 250,
à condition que, sur au moins un atome X, R³ et R⁴ représentent simultanément un alkyle.

5. Utilisation selon la revendication 3, dans laquelle les produits de départ pour ledit polycarbonate sont des dihydroxydiphénylcycloalcanes de la formule (Ia) 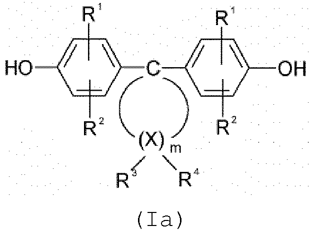 dans laquelle
X, R¹, R², R³, R⁴, m et n ont la signification donnée pour la formule (I),
de préférence, R³ et R⁴ représentent simultanément un alkyle sur un à deux atomes X, en particulier sur un seul atome X.

6. Utilisation selon la revendication 5, dans laquelle ledit radical alkyle est un méthyle ; les atomes X en position alpha par rapport à l'atome C substitué par un diphényle (C-1) ne sont pas substitués par un dialkyle, cependant avec la disubstitution alkyle en position bêta par rapport à C-1.

7. Utilisation selon la revendication 5, **caractérisée par** des dihydroxydiphénylcycloalcanes avec 5 et 6 atomes C cycliques dans le radical cycloaliphatique (m = 4 ou 5 dans la formule (Ia)), en particulier dans les diphénols des formules (Ib) à (Id) 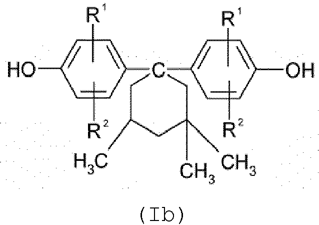 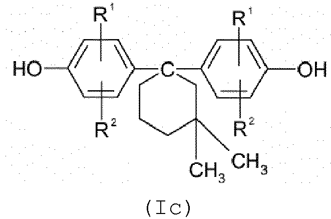 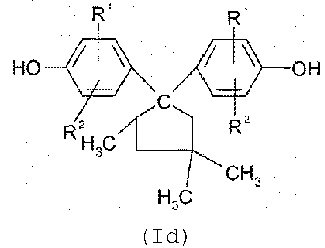 dans laquelle le 1,1-bis(4-hydroxyphényl)-3,3,5-triméthylcyclohexane (formule (Ib) avec R¹ et R² égaux à H).

8. Utilisation selon l'une quelconque des revendications 1 à 7, dans laquelle ledit substrat est constitué de poly(méthacrylate de méthyle), de polyester, en particulier de PET, de polycarbonate/polyester co-extrudés, de polyuréthane et/ou de poly(chlorure de vinyle).

9. Utilisation selon l'une quelconque des revendications 1 à 8 dans laquelle ledit revêtement dur a une épaisseur allant de 2 à 8 µm.
